(19) Europäisches Patentamt
European Patent Office
Office européen des brevets

(11) Publication number: **0 306 117 B1**

# EUROPEAN PATENT SPECIFICATION

(45) Date of publication of patent specification :
31.07.91 Bulletin 91/31

(51) Int. Cl.⁵ : **B60S 5/00, G06K 17/00**

(21) Application number: **88201911.0**

(22) Date of filing : **05.09.88**

(54) **Method for the managing of vehicle tires.**

(30) Priority : 04.09.87 NL 8702094

(43) Date of publication of application :
08.03.89 Bulletin 89/10

(45) Publication of the grant of the patent :
31.07.91 Bulletin 91/31

(84) Designated Contracting States :
AT BE CH DE ES FR GB IT LI LU NL SE

(56) References cited :
DE-A- 3 333 147
FR-A- 2 526 184
US-A- 4 010 354
US-A- 4 591 705

(56) References cited :
PATENT ABSTRACTS OF JAPAN, vol. 7, no.
168 (P-212)[1313], 23rd July 1983, page 137 P
212; & JP-A-58 75 266 (TOKYO SHIBAURA
DENKI K.K.) 06-05-1983
IBM TECHNICAL DISCLOSURE BULLETIN,
vol. 19, no. 5, October 1976, page 1828, New
York, US; P.C. FUROIS et al.: "Portable inven-
tory system and method"

(73) Proprietor : Meij, Piet
70 Smaragddijk
NL-4706 MD Roosendaal (NL)

(72) Inventor : Meij, Piet
70 Smaragddijk
NL-4706 MD Roosendaal (NL)

(74) Representative : Hoorweg, Petrus Nicolaas et
al
OCTROOIBUREAU ARNOLD & SIEDSMA
Sweelinckplein 1
NL-2517 GK The Hague (NL)

## Description

The present invention relates to a method for the managing of a plurality of vehicle tires. The book "Kraftfahrzeugräder und Reifendienst/Kraftfahrzeugräder und Reifen", Würzburg, 1986, comprises a table in the last pages in which several tire defects are listed, together with the most likely origins of said defects. One can derive from the presence of such a table that it is known to inspect tires ad hoc.

According to such a known method the condition of the tires is generally inspected at substantially random moments, after which it is decided with the help of said recorded condition of the tires whether the tires concerned have to be replaced, have to be turned on the rim, to be mounted on another wheel position on the same vehicle, etc. Generally such decisions are taken ad hoc based on experience. Whereas such decisions are taken only on the basis of said single inspection just completed, it is possible that the right decision to reach an optimal life time of the tire is not taken. Consequently the result of the managing of a number of vehicle tires according to this known method is not quite optimal; i.e. the theoretical maximal mileage of said tires is not being reached.

As a consequence of the fact that such inspections only take place at random moments, it is possible that a vehicle is used with a tire which is not in its optimal condition during a longer period, which fact also substantially increases the fuel consumption of said vehicle.

The aim of the present invention is to provide a method of the kind described above, in which as a result of a more careful management both the mileage of the tires is optimalised and wherein further the use of fuel of the vehicles, on to which the tires have been mounted, is decreased.

The present invention reaches this aim by: periodically recording the condition of the tire, supplying the information thus obtained into a memory and periodically deriving an advise relating to the application of said tires.

By taking into account the history of said tire in the method according to the present invention, said tire can be applied in the most fit way, so that the optimal mileage of the tire is reached. Further defects of the tire and of the vehicle, on to which the tire is mounted, are detected earlier, so that extra wear, which is a consequence of said defects is prevented in the earliest possible stage.

Subsequently the present invention will be elucidated with the help of an embodiment and with reference to the accompanying drawings, in which are depicted :

figure 1 : a schematic perspective view of a tire, which has been provided of identification means according to the present invention ;

figure 2 : a partial perspective view, partially broken away, of the location of the identification means according to the present invention ;

figure 3 : a schematic view of a substrate, which has been provided with a bar code for application in the present invention ;

figure 4 : a schematic view of a commercial vehicle during the inspection of a tire according to the present invention ; and

figure 5 : a functional diagram for elucidating the present invention.

According to the method according to the present invention, a plurality of tires, which are generally, but not exclusively mounted on a commercial vehicle, forming part of a single fleet of commercial vehicles, are inspected periodically, for instance every two months. During this periodical check all tires mounted in said commercial vehicle are inspected.

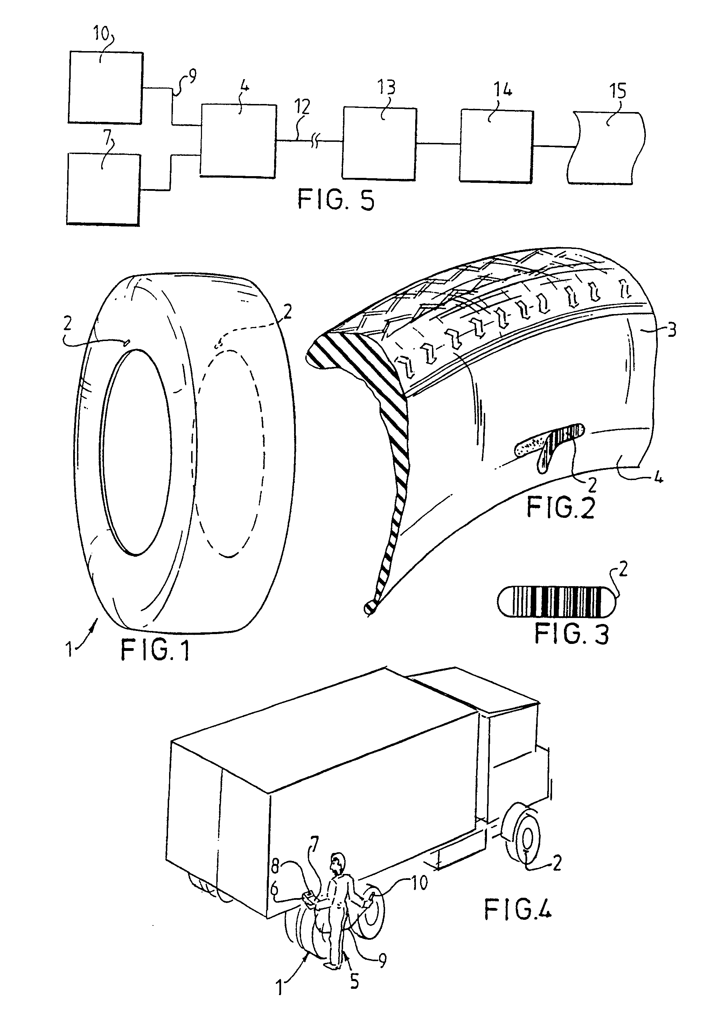

To be able to identify every tire, every tire 1 comprises two identification stickers 2, as is shown in figure 1. It is of course possible that the tire has been mounted in such a way on a rim, that one single identification sticker would not be visible. It is further possible to apply said identification sticker on the rim belonging to the tire 1. Instead of an identification sticker other identification means could have been applied.

In figure 2 it is shown how the identification sticker 2 has been applied on the side wall 3 of the tire 1 just above the rim edge 4. Generally the sticker is been applied by means of adhesive applied on the back side of the sticker 2, it is also possible to apply the sticker by means of vulcanising.

Figure 3 shows how such an identification sticker 2 comprises a bar code. Further the tire 1 is being identified by means of a code number applied on said tire, so that by the loss of the sticker nevertheless the tire can be identified.

It is further possible to provide the sticker of a magnetic code instead of a bar code.

The commercial vehicle, on to which the tire has been mounted, comprises just as well such an identification sticker 2. This identification sticker is preferably applied on the left back side of the cab. Whenever this sticker gets lost, the commercial vehicle can be identified by means of its number plate.

During the inspection of the tires belonging to a fleet of commercial vehicles, the following procedure applies :

The person 5 executing the inspection has been provided with a portable memory 6, comprising a keyboard 7 for inputting information and a display 8 for displaying said inputted information, whereas for the recording of the bar codes the portable memory 6 is further connected with a reading pencil 10 by means of a cable 9.

Initially during the inspection of the tires first of a commercial vehicle 11, the person 5 identifies the commercial vehicle 11 by moving the reading pencil 10 over the bar code not been depicted in the drawings, and applied to the commercial vehicle 11. Subsequently he identifies the inspected tire 1, after which he enters the position on the commercial vehicle 11 of the tire 1.

After that he records the condition of the tire ; he measures the tire pressure and the depth of profile, which informations are supplied to the memory 6 by means of the keyboard 7. Of course the tire pressure, if this deviates from its nominal value, is brought back to the nominal value by means of a compressor not depicted in the drawings.

Further a visual inspection of the conditions of wear of the tire 1 takes place. The appearing wear is divided into a class, and the class of wear is again entered into the portable memory. Examples of classes of wear are wear of the shoulder at the left side, wear of the shoulder at the right side ; groove wear ; breaking wear spots ; etc. Subsequently the band is visually inspected on possible damage of the tire. Such damage like tears in the tread, tears in the sides, and pins driven into are divided into classes and entered into the memory.

Further the frame of the commercial vehicle 11 is being inspected on possible damage or wear as broken springs, failures of aligning and so on. Such defects do have a disastrous effect on the rate of wear of the tire 1.

Subsequently such an inspection is executed for all tires mounted on said commercial vehicle 11. Of course it is by far the most easy to inspect all vehicles belonging to a fleet of commercial vehicles subsequently on the same way.

After the inspection all information obtained, which has been stored in the portable memory 6 is transferred to the memory 13 of a fixed computer 14 by means of a cable 12.

Now the computer 14 determines with the help of the information relating to the last executed inspection just entered and with the help of the information already being present in the fixed computer, relating to earlier inspections, which measures have to be taken to obtain the most economical mileage of the tires. With the measures thus executed the use fuel consumption of said vehicles will also decrease as a consequence of the better use of the tires.

The measures, which can be advised by the computer, are for instance : the turning of a tire on the rim, which can be sensible when the tire appears to have the so called shoulder wear ; the relocation of a tire from a front wheel to a rear wheel, which can be sensible when one side of the tire is worn substantially ; the replacement of a tire, when the tire shows general wear ; supplying the tire with a new tread, which can be useful when the mileage of the tire is small, so that its frame still has sufficient strength and when nevertheless the depth of profile has been decreased substantially, etc.

These informations are issued by the computer by means of an advise in writing. This advise will be sent to the manager of the fleet of commercial vehicles, of which the tires are managed according to the present invention, after which the manager will execute the advised measures.

There are situations, in which the manager of said fleet of vehicles will be less prone to execute the measures advised ; however this will appear automatically during a subsequent inspection.

The measures according to the present invention further have the advantage that defects, which are difficult to recognize as the very slowly flattening of a tire will appear in an earlier state as a consequence of the regular detection and registration, so that adequate measures can be taken.

## Claims

1. Method for the management of a plurality of vehicle tires, characterized by : periodically registering of the condition of the tire, the entering into a memory of the information thus obtained and the periodically deriving of an advise relating to the application of the tires from the information obtained during preceding registrations.

2. Method according to claim 1, characterized in that the vehicle tires belong to only one single fleet of commercial vehicles.

3. Method according to claim 1 or 2, characterized in that during the registration of the condition of the tire at least the tire pressure and the condition of wear of the tire are being registered.

4. Method according to claim 1, 2 or 3, characterized in that during the recording of the condition of the tire, the tire is being identified by means of a bar code.

5. Method according to one of the claims 1, 2, 3 or 4, characterized in that during the recording of the condition of the tire, the commercial vehicle is being identified by means of a bar code.

6. Method according to one of the preceding claims, characterized in that during the recording of the condition of the tire the wheel position of said tire is being identified.

7. Apparatus for carrying out the method of one of the preceding claims, characterized by at least one memory comprimising means for deriving an advise for optimal use of the tire from the information stored in said memory.

8. Apparatus according to claim 7, characterized by a portable memory and a fixed memory.

9. Apparatus according to claim 8, characterized in that the portable memory comprises a keyboard for the entering of information.

10. Apparatus according to claim 8 or 9, characterized in that the portable memory comprises a reading device for the reading of bar codes.

11. Apparatus according to one of the claims 7-10, characterized in that the portable memory comprises means for supplying information to the fixed memory, and that the means for deriving an optimal use of the tire are incorporated in the fixed memory.

**Patentansprüche**

1. Verfahren zum Handhaben von mehreren Fahrzeugreifen, **gekennzeichnet** durch periodisches Registrieren des Reifenzustandes, Speichern der dabei erhaltenen Information und periodisches Ableiten einer Anweisung bezüglich des Einsatzes der Reifen aus der während der vorhergehenden Registrierungen erhaltenen Information.

2. Verfahren nach Anspruch 1 dadurch **gekennzeichnet**, daß die Fahrzeugreifen nur zu einem einzelnen Wagenpark von Nutzfahrzeugen gehören.

3. Verfahren nach Anspruch 1 oder 2 dadurch **gekennzeichnet**, daß während der Registrierung des Reifenzustandes wenigstens der Reifendruck und der Zustand der Abnutzung des Reifens registriert werden.

4. Verfahren nach Anspruch 1, 2 oder 3 dadurch **gekennzeichnet**, daß während dem Aufzeichnen des Reifenzustandes der Reifen mittels eines Strichcodes identifiziert wird.

5. Verfahren nach einem der Ansprüche 1, 2, 3 oder 4 dadurch **gekennzeichnet**, daß während der Aufzeichnung des Reifenzustandes das Nutzfahrzeug mittels eines Streifencodes identifiziert wird.

6. Verfahren nach einem der vorstehenden Ansprüche dadurch **gekennzeichnet**, daß während dem Aufzeichnen des Reifenzustandes die Radposition des Reifens identifiziert wird.

7. Vorrichtung zum Durchführen des Verfahrens nach einem der vorstehenden Ansprüche, **gekennzeichnet** durch wenigstens eine einen Speicher aufweisende Einrichtung zum Ableiten einer Anweisung für den optimalen Einsatz des Reifens aus der in dem Speicher gespeicherten Information.

8. Vorrichtung nach Anspruch 7 **gekennzeichnet** durch einen tragbaren Speicher und einen feststehenden Speicher.

9. Vorrichtung nach Anspruch 8 dadurch **gekennzeichnet**, daß der tragbare Speicher eine Tastatur zum Eingeben von Informationen enthält.

10. Vorrichtung nach Anspruch 8 oder 9 dadurch **gekennzeichnet**, daß der tragbare Speicher eine Leseeinrichtung zum Lesen von Strichcodes aufweist.

11. Vorrichtung nach einem der Ansprüche 7 bis 10 dadurch **gekennzeichnet**, daß der tragbare Speicher eine Einrichtung zum Versorgen des feststehenden Speichers mit Information aufweist, und daß die Einrichtung zum Ableiten eines optimalen Einsatzes des Reifens im feststehenden Speicher eingebaut ist.

**Revendications**

1. Méthode pour la gestion d'une pluralité de pneus de véhicules, caractérisée par : un enregistrement périodique de la condition du pneu, l'entrée en mémoire des informations ainsi obtenues et l'obtention périodique d'un avis concernant l'utilisation des pneus
à partir des informations obtenues durant des enregistrements précédents.

2. Méthode selon la revendication 1, caractérisée en ce que les pneus de véhicules appartiennent à un seul parc de véhicules commerciaux.

3. Méthode selon la revendication 1 ou 2, caractérisée en ce que, durant l'enregistrement de la condition du pneu, la pression du pneu et sa condition d'usure au moins sont enregistrées.

4. Méthode selon la revendication 1, 2 ou 3, caractérisée en ce que, durant l'enregistrement de la condition du pneu, celui-ci est identifié grâce à un code à barre.

5. Méthode selon la revendication 1, 2, 3 ou 4, caractérisée en ce que, durant l'enregistrement de la condition du pneu, le véhicule commercial est identifié grâce à un code à barre.

6. Méthode selon l'une des revendications précédentes, caractérisée en ce que, durant l'enregistrement de la condition du pneu, la roue sur laquelle est monté ledit pneu est identifiée.

7. Dispositif pour la mise en oeuvre de la méthode définie selon l'une des revendications précédentes, caractérisé en ce qu'il présente au moins un moyen de décision à mémoire pour fournir un avis sur l'utilisation optimale du pneu à l'aide des informations stockées dans ladite mémoire.

8. Dispositif selon la revendication 7, caractérisé en ce qu'il comporte une mémoire portable et une mémoire fixe.

9. Dispositif selon la revendication 8, caractérisé en ce que la mémoire portable comporte un clavier pour la saisie d'informations.

10. Dispositif selon la revendication 8 ou 9, caractérisé en ce que la mémoire portable comporte un dispositif de lecture pour la lecture de codes à barre.

11. Dispositif selon l'une des revendications 7 à 10, caractérisé en ce que la mémoire portable comporte des moyens pour fournir des informations à la mémoire fixe, et en ce que les moyens pour déduire une utilisation optimale du pneu sont incorporés dans la mémoire fixe.

FIG. 5

FIG.1

FIG.2

FIG. 3

FIG.4